# EUROPÄISCHE PATENTSCHRIFT

(11) **EP 1 949 087 B1**
(45) Veröffentlichungstag und Bekanntmachung des Hinweises auf die Patenterteilung: **11.03.2015**
(21) Anmeldenummer: 06829032.9
(22) Anmeldetag: 13.11.2006
(51) Int. Cl.: G01N 23/04

(54) **RÖNTGENPRÜFVERFAHREN UND RÖNTGENPRÜFVORRICHTUNG**
X-RAY TESTING METHOD AND X-RAY TESTING DEVICE
PROCEDE D'EXAMEN RADIOGRAPHIQUE ET DISPOSITIF D'EXAMEN RADIOGRAPHIQUE

(30) Priorität: 16.11.2005 DE 102005054979
(43) Veröffentlichungstag der Anmeldung: 30.07.2008
(73) Patentinhaber: MatriX Technologies GmbH, 85622 Feldkirchen (München) (DE)
(72) Erfinder: SPERSCHNEIDER, Eckhard, 85579 Neubiberg (DE); RIMBACH, Jan, 99096 Erfurt (DE); SOKOLOWSKI, Martin, 84424 Isen (DE); MCGANN, Timothy, Del Mar, CA 92014 (US)
(74) Vertreter: Waller, Stefan
(86) Internationale Anmeldenummer: PCT/EP2006/010874
(87) Internationale Veröffentlichungsnummer: WO 2007/057144

(56) Entgegenhaltungen:
- JP-A- 3 072 249
- JP-A- 2001 050 730
- US-A- 5 400 381
- US-A- 5 836 504
- US-A1- 2001 040 217
- FELDMANN K ET AL: "CLOSED LOOP QUALITY CONTROL IN PRINTED CIRCUIT ASSEMBLY" IEEE TRANSACTIONS ON COMPONENTS, PACKAGING AND MANUFACTURING TECHNOLOGY: PART A, IEEE SERVICE CENTER, PISCATAWAY, NJ, US, Bd. 17, Nr. 2, 1. Juni 1994 (1994-06-01), Seiten 270-276, XP000455263 ISSN: 1070-9886
- C. K. CHOW ET AL: 'X-ray Image Subtraction by Digital Means' IBM JOURNAL OF RESEARCH AND DEVELOPMENT Bd. 17, Nr. 3, 01 Mai 1973, Seiten 206 - 218, XP055024738 DOI: 10.1147/rd.173.0206 ISSN: 0018-8646

## Beschreibung

Die vorliegende Erfindung betrifft ein Röntgenprüfverfahren und eine Röntgenprüfvorrichtung, zum Prüfen von Gegenständen. Insbesondere betrifft die Erfindung ein Röntgenprüfverfahren und eine Röntgenprüfvorrichtung zum Röntgen von doppelseitig, d.h. auf Oberseite und Unterseite mit elektronischen Bauelementen bestückten Leiterplatten.

Bei der Fertigung von Leiterplatten in surface mounted techriology (SMT) wird zunehmend das sogenannte beidseitige Reflow-Verfahren abgewandt, bei dem sowohl die Oberseite, wie die Unterseite der Leiterplatte bestückt werden. Dabei durchläuft eine Leiterplatte eine Fertigungslinie zweimal oder zwei hintereinander angeordnete Fertigungslinien, wobei für die Oberseite, wie für die Unterseite die Fertigungsschritte des Lötpastendrucks, der Bestückung und des Aufschmelzlötens (Reflow) getrennt nacheinander erfolgt.

Bekannt ist, die Qualität der Lötstellen der Leiterplatte durch ein Transmissionsverfahren zu überprüfen, bei dem die Leiterplatte senkrecht mit Röntgenstrahlen durchleuchtet und eine Aufnahme gemacht wird. Dies ermöglicht eine Überprüfung der Lötstellen, wenn nur eine Seite der Leiterplatte bestückt ist. Bei einer beidseitig bestückten Leiterplatte können sich Bauelemente und Lötstellen überlagern und dadurch eine Beurteilung der Lötstellen verhindern.

Es ist auch bekannt, zur Prüfung beidseitig bestückter Leiterplatten Röntgensysteme zu verwenden, die aus Röntgenaufnahmen eine Rekonstruktion einer Querschnittsebene der Lötstellen der Oberseite, als auch einer Querschnittsebene der Lötstellen der Unterseite ermöglichen. Bekannt ist, diese Querschnittsebenen aus Aufnahmen unter verschiedenen Winkeln mit Verfahren der Computertomographie zu berechnen.

Nachteilig an diesem Verfahren ist, dass die Qualität der rekonstruierten Querschnittsebene wesentlich von der verfügbaren Anzahl von Projektionen abhängt. Dabei müssen Projektionen unter unterschiedlichen, möglichst weit voneinander abweichenden Winkel erstellt werden. Dies führt zu einer langen Messdauer durch das mechanische Verfahren in die nächste Winkelposition und durch die exponentiell wachsende Datenmenge. Bei Projektionen mit Hilfe von Röntgenstahlen kommt hinzu, dass jede Projektion über einen gewissen Zeitraum integriert werden muss, um ein Rauschen im Bild möglichst weit zu reduzieren.

Weiter sind Laminographieverfahren und Tomosyntheseverfahren bekannt. Bei den Laminographieverfahrene erfolgt die Bildaufnahme schichtweise, indem die Röntgenaufnahme auf eine bestimmte Schicht fokussiert wird. Bei den Tomosynthesverfahren wird eine Mehrzahl von Röntgenaufnahmen unter verschiedenen Winkeln aufgenommen und aus diesen in einem Computer eine Abbildung einer Schicht oder eines Schnittes berechnet.

Nachteilig an diesen bekannten Verfahren ist, dass sie relativ aufwendig sind.

Aus der US 5,836,504 A sowie der JP 2001 050730 A. sind gattungsgemäße Röntgenprüfverfahren bekannt.

Es ist daher Aufgabe der vorliegenden Erfindung, ein Röntgenprüfverfahren und eine Röntgenprüfvorrichtung zur Verfügung zu stellen, mit denen es möglich ist, zwei oder mehr Ebenen eines Gegenstands auf einfache Weise darzustellen.

Diese Aufgabe wird durch ein Röntgenprüfverfahren mit den Merkmalen des Anspruchs 1 und eine Röntgenprüfvorrichtung mit den Merkmalen des Anspruchs 10 sowie eine Bestückungsanlage mit den Merkmalen des Anspruchs 11 gelöst. Vorteilhafte Weiterbildungen werden in den Unteransprüchen angegeben.

Bei dem erfindungsgemäßen Röntgenprüfverfahren zum Überprüfen von auf zwei Seiten mit Bauelementen bestückten Leiterplatten, insbesondere zum Überprüfen der Lötstellen, wird in einem ersten Schritt eine ersten Röntgenaufnahme der nur auf einer ersten Seite mit Bauelementen bestückten Leiterplatte mit einer ersten Röntgenvorrichtung, die Transmissionsaufnahmen erzeugt, aufgenommen und sodann eine zweite Röntgenaufnahme einer auf beiden Seiten mit Bauelementen bestückten Leiterplatte mit einer zweiten Röntgenvorrichtung, die Transmissionsaufnahmen erzeugt, aufgenommen.

In einer Computereinheit wird ein Prüfröntgenbild berechnet, auf dem die mit den Bauelementen bestückte zweite Seite verstärkt dargestellt ist, indem eine Funktion aus den Bildpunktwerten der erste Röntgenaufnahme und den zugehörigen entsprechenden Bildpunktwerten der zweiter Röntgenaufnahme gebildet wird.

Dadurch ist es möglich, durch das Prüfröntgenbild die zweite mit Bauteilen bestückte Seite darzustellen. ohne dass Überdeckungen durch die erste Seite eine Prüfung verhindern. Weiter ist vorteilhaft, dass eine relativ gut zur Verfügung stehende Röntgenvorrichtung für Transmissionsaufnahmen für das erfindungsgemäße Verfahren ausreicht.

Vorteilhaft umfasst die Funktion für das Prüfröntgenbild eine Subtraktion der Bildpunktwerte der ersten Röntgenaufnahme von den Bildpunktwerten der zweiten Röntgenaufnahme.

Dadurch wird im Idealfall das Bild der Bestückung und der Lötstellen der ersten Seite der Leiterplatte herausgefiltert und das Prüfröntgenbild stellt in guter Qualität die Bestückung der zweiten Seite und deren Lötstellen dar.

In vorteilhafter Ausführung des Verfahrens umfasst die Funktion für das Prüfröntgenbild eine Quotientenbildung aus den Bildpunktwerten der ersten Röntgenaufnahme und den Bildpunktwerten der zweiten Röntgenaufnahme. Erfindungsgemäß umfasst die Funktion für das Prüfröntgenbild eine Funktion der ersten und zweiten Ableitung der Bildpunktwerte von Bildobjektkanten der ersten und/oder zweiten Röntgenaufnahme.

Da sich das Absorptionsverhalten der Röntgenstrahlung nicht linear mit steigender Materialstärke ändert, ist die Absorptionskurve oder Gammakurve keine Gerade. Unterschiedliche Materialien, wie Bauteile, Leiterplatte, Kupferlagen, etc., verfügen über ein unterschiedliches Absorptionsverhalten. Auch verfälscht ein Detektor für Röntgenstrahlung in der Röntgenvorrichtung die Grauwerte in Abhängigkeit des Bildinhaltes, beispielsweise in Bereichen hohen Kontrasts wie an Kanten, oder im Falle des Übersprechens auf dem CCD Sensor. Um dies zu vermeiden, können andere mathematische Funktionen der Bildwerte einander zugeordneter Bildpunkte der zwei Röntgenaufnahmen verwendet werden. Ebenso können Funktionen die Bildpunktumgebung berücksichtigen, wie etwa die Ableitung der Grauwerte im Bereich von Kanten. Allgemein können die geschilderten problematischen Effekte durch eine Vorverarbeitung der aufgenommenen Röntgenaufnahmen vermieden werden. Hierzu kann beispielsweise auch eine Aufnahme einer Absorptionkurve durch Kalibrierung mit Prüfleiterplatten genutzt werden oder allgemein eine Kalibrierung mittels weiterer Randparameter.

Vorteilhaft erfolgt zur Aufnahme einer mit der ersten Röntgenaufnahme deckungsgleichen zweiten Röntgenaufnahme eine Ausrichtung und Bildmaßstabeinstellung durch Mustererkennung und/oder Kantenausrichtung. Die Ausrichtung kann durch Suchen von Mustern und/oder Kanten nach CAD-Wert-Vorgaben in der ersten und/oder zweiten Röntgenaufnahme erfolgen.

Eine wesentliche Voraussetzung der Berechnung eines Prüfröntgenbilds ist, dass beide Röntgenaufnahmen deckungsgleich sind. Dies kann durch eine annähern gleiche Aufnahmeposition erreicht werden, um z.B. den Einfluss der Paralaxe zu umgehen. Die Ausrichtung der zweiten Aufnahme ebenso wie die Bestimmung der Abbildungsgröße kann dann anhand der zweiten Röntgenaufnahme und der Erkennung von Mustern bzw. das Ausrichten an Kanten erfolgen. Vorteilhaft wird bei der Aufnahme der ersten Röntgenaufnahme die Ausrichtung für die Röntgenaufnahmen der zweiten Seite bereits optimiert, z.B. indem Konstruktions- bzw. CAD-Daten für die Ausrichtung genutzt werden.

In vorteilhafter Ausführung wird als erste Röntgenaufnahme eine einzelne Röntgenaufnahme einer nur einseitig bestückten Musterleiterplatte benutzt und ein Prüfröntgenbild der zweiten Seite einer Vielzahl von Leiterplatten mit dieser ersten Röntgenaufnahme bestimmt. Weiter können sowohl für Oberseite, wie Unterseite der Leiterplatte Prüfröntgenbilder mithilfe von jeweils ersten Röntgenaufnahmen von Musterleiterplatten bestimmt werden.

Dies ermöglicht, mit nur jeweils einer Aufnahme der bereits beidseitig bestückten Leiterplatten am Ende der Bestückung in einer Röntgenvorrichtung die Lötstellen der Ober- wie auch Unterseite zu prüfen, indem jeweils ein Prüfröntgenbild für die Oberseite und die Unterseite bestimmt wird. Es ist dann lediglich nötig, eine Musterleiterplatte, die nur auf der Oberseite bestückt ist, herzustellen und ebenso eine, die nur auf der Unterseite bestückt ist. Von diesen beiden Musterleiterplatten werden Röntgenaufnahmen erstellt und mit diesen kann aus den Aufnahmen der beidseitig bestückten Leiterplatten während der Produktion jeweils ein Prüfröntgenbild der Oberseite und der Unterseite bestimmt werden.

Bei der Bestückung von Leiterplatten für jede Leiterplatte kann eine erste Röntgenaufnahme aufgenommen und gespeichert werden und sodann für jede Leiterplatte eine zweite Röntgenaufnahme aufgenommen werden. Die Bestückungsvorrichtung und eine Röntgenvorrichtung kann von den Leiterplatten zweimal durchlaufen werden und die Röntgenvorrichtung als erste und zweite Röntgenvorrichtung dienen.

Somit kann das erfindungsgemäße Verfahren auf bestehenden Bestückungsanlagen, mit geringen Modifikationen der Bestückungsanlage eingesetzt werden.

Nach einer ersten Bestückung einer Seite in einer ersten Bestückungsvorrichtung kann die erste Röntgenaufnahme in der ersten Röntgenvorrichtung und nach einer zweiten Bestückung der zweiten Seite in einer zweiten Bestückungsvorrichtung die zweite Röntgenaufnahme in der zweiten Röntgenvorrichtung erfolgen.

Dadurch wird ein schneller Durchlauf der Leiterplatten durch die Bestückung mit Bauteilen möglich. Insbesondere ermöglich eine Röntgenvorrichtung nach dem Transmissionsverfahren eine zeitsparende Aufnahme der Röntgenaufnahmen.

Die Aufgabe wird ebenfalls durch eine Röntgenprüfvorrichtung mit den Merkmalen des Anspruchs 10 sowie eine Bestückungsanlage mit den Merkmalen des Anspruchs 11 gelöst, die dieselben, bereits geschilderten Vorteile aufweisen.

Ein Ausführungsbeispiel des erfindungsgemäßen Verfahrens zum Röntgen und des Röntgensystems werden in den nachfolgenden Zeichnungen näher erläutert. Bei diesen zeigt:
- Fig. 1: schematisch den Ablauf des erfindungsgemäßen Verfahrens zum Röntgen von Leiterplatten,
- Fig. 2a: einen Ausschnitt einer Röntgenaufnahme einer nur auf der Oberseite bestückten Leiterplatte,
- Fig. 2b: den Ausschnitt der Fig. 2a der auf der Oberseite und Unterseite bestückten Leiterplatte,
- Fig. 2c: die Abbildung der Unterseite des Ausschnitts der Fig. 2a, die mit dem erfindungsgemäßen Verfahren gewonnen wurde,
- Fig. 3a: einen Ausschnitt einer Röntgenaufnahme einer nur auf der Oberseite bestückten Leiterplatte,
- Fig. 3b: den Ausschnitt der Fig. 3a der auf der Oberseite und Unterseite bestückten Leiterplatte,
- Fig. 3c: die Abbildung der Unterseite des Ausschnitts der Fig. 3a, die mit dem erfindungsgemäßen Verfahren gewonnen wurde,

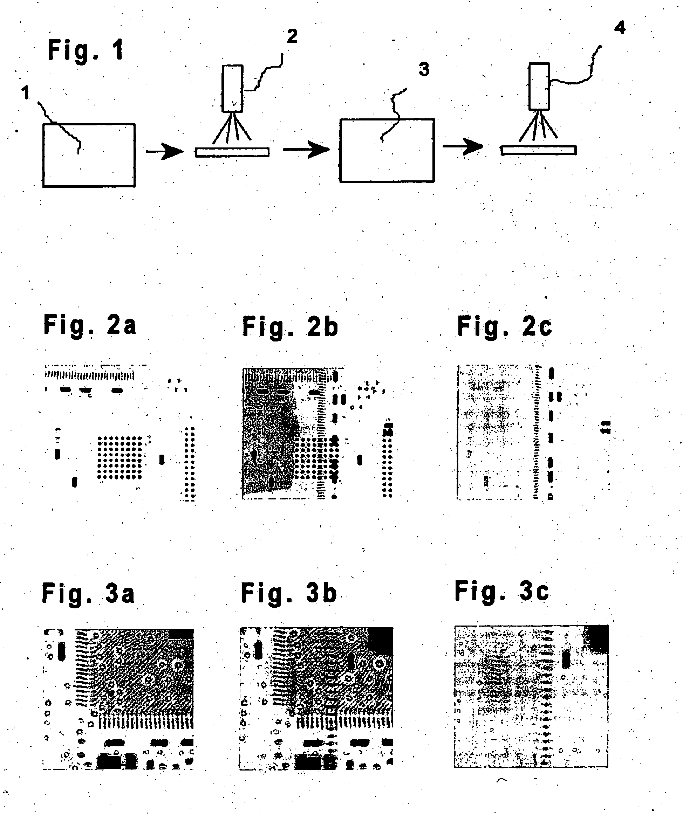

Fig. 1 zeigt schematisch den Ablauf des erfindungsgemäßen Verfahrens zum Röntgen von Leiterplatten. Nach einer ersten Bestückung einer ersten Seite der Leiterplatten in einer ersten Bestückungsvorrichtung 1 werden die Leiterplatten, angedeutet durch den Pfeil, in eine erste Röntgenvorrichtung 2 verbracht und eine erste Röntgenaufnahme wird aufgenommen. Das aufgenommene Bild wird in einer nicht dargestellten Computereinheit gespeichert. Sodann werden die Leiterplatten auf der zweiten Seite in einer zweiten Bestückungsvorrichtung 3 mit Bauelementen bestückt, die aufgelötet werden. In einer zweiten Röntgenvorrichtung 4 wird eine zweite Röntgenaufnahme aufgenommen. Aus der zweiten Röntgenaufnahme und der ersten Röntgenaufnahme berechnet die Computereinheit ein Röntgenprüfbild, im vorliegenden Beispiel, indem von der auf denselben Maßstab und dieselbe Perspektive wie die erste Röntgenaufnahme ausgerichteten zweiten Röntgenaufnahme die erste Röntgenaufnahme bildpunktweise subtrahiert wird. Dabei kann die gegenseitige Ausrichtung der ersten und zweiten Röntgenaufnahme in Maßstabe und perspektivischer Verzerrung auch durch eine Bildbearbeitung in der Computereinheit erfolgen.

In der Fig. 2a ist ein Ausschnitt einer ersten Röntgenaufnahme einer nur auf der Oberseite bestückten Leiterplatte dargestellt. Die Lötstellen treten dabei deutlich als dunkle Schatten hervor. Denselben Bildausschnitt einer genau gleich ausgerichteten und den gleichen Maßstab aufweisenden zweiten Röntgenaufnahme der nun zweiseitig bestückten Leiterplatte zeigt Fig. 2b. Die auf der Oberseite und Unterseite bestückte Leiterplatte zeigt nun ungefähr in Bildmitte Lötstellen, die auf Ober- und Unterseite übereinander liegen, sich überdecken und eine herkömmliche Prüfung verhindern.

Die Fig. 2c zeigt den entsprechenden Ausschnitt des berechneten Prüfröntgenbilds der Unterseite der Leiterplatte, das mit dem erfindungsgemäßen Verfahren gewonnen wurde. Dabei wurde von der zweiten Röntgenaufnahme der Fig. 2b die erste Röntgenaufnahme der Fig. 2a subtrahiert. Die zuvor teilweise überdeckten Lötstellen in der senkrecht durchlaufenden Linie von Lötstellen können nun beurteilt werden, da die Elemente der Unterseite der Leiterplatte auf dem Röntgenprüfbild stark betont sind.

Fig. 3a zeigt einen Ausschnitt einer ersten Röntgenaufnahme einer nur auf der Oberseite bestückten Leiterplatte und Fig. Fig. 3b den Ausschnitt der Fig. 3a der auf der Oberseite und Unterseite bestückten Leiterplatte entsprechend dem Beispiel der Fig.2a, Fig. 2b.

Der zughörige Ausschnitt der Fig. 3c zeigt ein Röntgenprüfbild, das wiederum die Prüfung einer in Fig. 3b überdeckten Lötstelle in der Bildmitte an dem Schnittpunkt der zwei Bauteilanschlussreihen auf Ober- und Unterseite zeigt. Abweichen zu dem Beispiel der Fig. 2a bis Fig. 2b wurde das Röntgenprüfbild durch eine Funktion berechnet, die nicht allein aus einer Subtraktion besteht, sondern auch eine Quotientenbildung beinhaltet. Dadurch ist es besser möglich, das nichtlineare Absorptionsverhalten zu berücksichtigen und das Bild der Unterseite noch stärker hervorzuheben.

Durch den Aufbau mit zwei Röntgenvorrichtungen nach dem Transmissionsverfahren, die sehr schnell Aufnahmen erstellen können, ist eine Prüfung ohne Verzögerung der Bestückungsgeschwindigkeit möglich.

### Bezugszeichen

- 1: erste Bestückungsvorrichtung
- 2: erste Röntgenvorrichtung
- 3: zweite Bestückungsvorrichtung
- 4: zweite Röntgenvorrichtung

## Patentansprüche

1. Röntgenprüfverfahren zum Überprüfen von auf zwei Seiten mit Bauelementen bestückten Leiterplatten, insbesondere zum Überprüfen der Lötstellen, mit den Schritten:
- Aufnehmen einer ersten Röntgenaufnahme der nur auf einer ersten Seite mit Bauelementen bestückten Leiterplatte mit einer ersten Röntgenvorrichtung (2), die Transmissionsaufnahmen erzeugt,
- Aufnehmen einer zweiten Röntgenaufnahme einer auf beiden Seiten mit Bauelementen bestückten Leiterplatte mit einer zweiten Röntgenvorrichtung (4), die Transmissionsaufnahmen erzeugt,
- Berechnen eines Prüfröntgenbilds in einer Computereinheit, auf dem die mit den Bauelementen bestückte zweite Seite verstärkt dargestellt ist, durch Bilden einer Funktion aus den Bildpunktwerten der ersten Röntgenaufnahme und den zugehörigen entsprechenden Bildpunktwerten der zweiten Röntgenaufnahme,
wobei
die Funktion für das Prüfröntgenbild eine Funktion der ersten und zweiten Ableitung der Bildpunktwerte von Bildobjektkanten der ersten und/oder zweiten Röntgenaufnahme ist und
die Funktion für das Prüfröntgenbild eine Subtraktion der Bildpunktwerte der ersten Röntgenaufnahme von den Bildpunktwerten der zweiten Röntgenaufnahme umfasst.

2. Röntgenprüfverfahren nach Anspruch 1,
**dadurch gekennzeichnet,**
**dass** die Funktion für das Prüfröntgenbild eine Quotientenbildung aus den Bildpunktwerten der ersten Röntgenaufnahme und den Bildpunktwerten der zweiten Röntgenaufnahme umfasst.

3. Röntgenprüfverfahren nach einem der vorhergehenden Ansprüche,
**dadurch gekennzeichnet,**
**dass** zur Aufnahme einer mit der ersten Röntgenaufnahme deckungsgleichen zweiten Röntgenaufnahme eine Ausrichtung und Bildmaßstabeinstellung durch Mustererkennung und/oder Kantenausrichtung erfolgt.

4. Röntgenprüfverfahren nach einem der vorhergehenden Ansprüche,
**dadurch gekennzeichnet,**
**dass** für deckungsgleiche Röntgenaufnahmen zur Ausrichtung und zur Bildmaßstabeinstellung der ersten und/oder zweiten Röntgenaufnahme Muster und/oder Kanten nach CAD-Wert-Vorgaben gesucht werden.

5. Röntgenprüfverfahren nach einem der vorhergehenden Ansprüche,
**dadurch gekennzeichnet,**
**dass** als erste Röntgenaufnahme eine einzelne Röntgenaufnahme einer nur einseitig bestückten Musterleiterplatte dient und ein Prüfröntgenbild der zweiten Seite einer Vielzahl von Leiterplatten mit dieser ersten Röntgenaufnahme bestimmt wird.

6. Röntgenprüfverfahren nach Anspruch 5,
**dadurch gekennzeichnet,**
**dass** sowohl für Oberseite, wie Unterseite der Leiterplatte Prüfröntgenbilder mithilfe von jeweils ersten Röntgenaufnahmen von Musterleiterplatten bestimmt werden.

7. Röntgenprüfverfahren nach einem der Ansprüche 1 bis 4,
**dadurch gekennzeichnet,**
**dass** bei der Bestückung von Leiterplatten für jede Leiterplatte eine erste Röntgenaufnahme aufgenommen und gespeichert wird und sodann für jede Leiterplatte eine zweite Röntgenaufnahme aufgenommen wird.

8. Röntgenprüfverfahren nach Anspruch 7,
**dadurch gekennzeichnet,**
**dass** eine Bestückungsvorrichtung und eine Röntgenvorrichtung von den Leiterplatten zweimal durchlaufen wird und die Röntgenvorrichtung als erste und zweite Röntgenvorrichtung dient.

9. Röntgenprüfverfahren nach Anspruch 7,
**dadurch gekennzeichnet,**
**dass** nach einer ersten Bestückung einer Seite in einer ersten Bestückungsvorrichtung (1) die erste Röntgenaufnahme in der ersten Röntgenvorrichtung (2) erfolgt und nach einer zweiten Bestückung der zweiten Seite in einer zweiten Bestückungsvorrichtung (3) die zweite Röntgenaufnahme in der zweiten Röntgenvorrichtung (4) erfolgt.

10. Röntgenprüfvorrichtung mit zumindest einer Röntgenvorrichtung, die Transmissionsaufnahmen erzeugt, und einer Computereinheit,
**dadurch gekennzeichnet,**
**dass** auf dieser ein Verfahren nach einem der Ansprüche 1 bis 8 abläuft.

11. Bestückungsanlage für Leiterplatten mit zwei Bestückungsvorrichtungen und zwei Röntgenvorrichtungen,
**dadurch gekennzeichnet,**
**dass** auf dieser ein Verfahren nach Anspruch 9 abläuft.

## Claims

1. X-ray testing method for inspecting printed circuit boards fitted on two sides with components, in particular for inspecting the soldered joints, having the steps of:
- taking a first x-ray picture of the printed circuit board fitted only on a first side with components with the aid of a first x-ray device (2) which produces transmission pictures,
- taking a second x-ray picture of a printed circuit board fitted on both sides with components with the aid of a second x-ray device (4) which produces transmission pictures,
- calculating a test x-ray image in a computer unit on which the second side fitted with the components is displayed as intensified by forming a function from the pixel values of the first x-ray picture and the associated corresponding pixel values of the second x-ray picture,
in which
the function for the test x-ray image is a function of the first and second derivative of the pixel values of image object edges of the first and/or second x-ray picture, and
the function for the test x-ray image comprises the subtraction of the pixel values of the first x-ray picture from the pixel values of the second x-ray picture.

2. X-ray testing method according to Claim 1, **characterized in that** the function for the test x-ray image comprises a quotient consisting of the pixel values of the first x-ray picture and the pixel values of the second x-ray picture.

3. X-ray testing method according to one of the preceding claims, **characterized in that** in order to take a second x-ray picture that is congruent with the first x-ray picture alignment and image scale setting are performed by pattern recognition and/or edge alignment.

4. X-ray testing method according to one of the preceding claims, **characterized in that** patterns and/or edges in accordance with CAD value targets are sought for congruent x-ray pictures for aligning and for image scale setting of the first and/or second x-ray picture.

5. X-ray testing method according to one of the preceding claims, **characterized in that** an individual x-ray picture of a pattern printed circuit board fitted only on one side serves as first x-ray picture, and a test x-ray image of the second side of a multiplicity of printed circuit boards with said first x-ray picture is determined.

6. X-ray testing method according to Claim 5, **characterized in that** test x-ray images are determined with the aid of respective first x-ray pictures of pattern printed circuit boards both for the top side and underside of the printed circuit board.

7. X-ray testing method according to one of Claims 1 to 4, **characterized in that** while the printed circuit boards are being fitted a first x-ray picture is taken of each printed circuit board and stored and then a second x-ray picture is taken of each printed circuit board.

8. X-ray testing method according to Claim 7, **characterized in that** a component-fitting apparatus and an x-ray device are traversed twice by the printed circuit boards, and the x-ray device serves as first and second x-ray device.

9. X-ray testing method according to Claim 7, **characterized in that** after a first fitting of one side in a first component-fitting apparatus (1) the first x-ray picture is taken in the first x-ray device (2), and after a second fitting of the second side in a second component-fitting apparatus (3) the second x-ray picture is taken in the second x-ray device (4).

10. X-ray testing device having at least one x-ray device which produces transmission pictures, and a computer unit, **characterized in that** a method according to one of Claims 1 to 8 is executed thereon.

11. Component-fitting system for printed circuit boards having two component-fitting apparatuses and two x-ray devices, **characterized in that** a method according to Claim 9 is executed thereon.

## Revendications

1. Procédé de contrôle aux rayons X destiné à contrôler des circuits imprimés sur lesquels des composants sont implantés sur deux faces, notamment pour contrôler les points de soudure, comprenant les étapes suivantes :
- enregistrement d'une première radiographie du circuit imprimé sur lequel des composants ne sont implantés que sur une première face avec un premier dispositif à rayons X (2) qui génère des enregistrements par transmission,
- enregistrement d'une deuxième radiographie d'un circuit imprimé sur lequel des composants sont implantés sur les deux faces avec un deuxième dispositif à rayons X (4) qui génère des enregistrements par transmission,
- calcul d'une image radiographique de contrôle dans une unité informatique, sur laquelle la deuxième face sur laquelle sont implantés les composants est représentée de manière renforcée, par formation d'une fonction à partir des valeurs de pixel de la première radiographie et des valeurs de pixel correspondantes associées de la deuxième radiographie,
procédé selon lequel
la fonction pour l'image radiographique de contrôle est une fonction de la première et de la deuxième dérivée des valeurs de pixel de bords d'objets d'image de la première et/ou de la deuxième radiographie et
la fonction pour l'image radiographique de contrôle comprend une soustraction des valeurs de pixel de la première radiographie des valeurs de pixel de la deuxième radiographie.

2. Procédé de contrôle aux rayons X selon la revendication 1, **caractérisé en ce que** la fonction pour l'image radiographique de contrôle comprend le calcul d'un quotient à partir des valeurs de pixel de la première radiographie et des valeurs de pixel de la deuxième radiographie.

3. Procédé de contrôle aux rayons X selon l'une des revendications précédentes, **caractérisé en ce qu'**un alignement et un réglage de l'échelle de l'image par reconnaissance de modèle et/ou alignement des bords sont effectués en vue de l'enregistrement d'une deuxième radiographie en coïncidence avec la première radiographie.

4. Procédé de contrôle aux rayons X selon l'une des revendications précédentes, **caractérisé en ce que** pour des radiographies en coïncidence, des modèles et/ou des bords sont recherchés conformément à des valeurs de CAO prédéfinies en vue de l'alignement et en vue du réglage de l'échelle de l'image de la première et/ou de la deuxième radiographie.

5. Procédé de contrôle aux rayons X selon l'une des revendications précédentes, **caractérisé en ce qu'**une radiographie unique d'un modèle de circuit imprimé dont une seule face est implantée sert de première radiographie et une image radiographique de contrôle de la deuxième face d'une pluralité de circuits imprimés est définie avec cette première radiographie.

6. Procédé de contrôle aux rayons X selon la revendication 5, **caractérisé en ce que** des images radiographiques de contrôle sont définies à l'aide de premières radiographies respectives de modèles de circuit imprimé à la fois pour le dessus et le dessous du circuit imprimé.

7. Procédé de contrôle aux rayons X selon l'une des revendications 1 à 4, **caractérisé en ce que** lors de l'implantation de circuits imprimés, une première radiographie est enregistrée et mise en mémoire pour chaque circuit imprimé et une deuxième radiographie est ensuite enregistrée pour chaque circuit imprimé.

8. Procédé de contrôle aux rayons X selon la revendication 7, **caractérisé en ce que** les circuits imprimés traversent deux fois un dispositif d'implantation et un dispositif à rayons X et le dispositif à rayons X fait office de premier et de deuxième dispositif à rayons X.

9. Procédé de contrôle aux rayons X selon la revendication 7, **caractérisé en ce qu'**après une première implantation d'une face dans un premier dispositif d'implantation (1), la première radiographie est effectuée dans le premier dispositif à rayons X (2) et après une deuxième implantation de la deuxième face dans un deuxième dispositif d'implantation (3), la deuxième radiographie est effectuée dans le deuxième dispositif à rayons X (4).

10. Dispositif de contrôle radiographique comprenant au moins un dispositif à rayons X qui génère des enregistrements par transmission et une unité informatique, **caractérisé en ce qu'**un procédé selon l'une des revendications 1 à 8 est mis en oeuvre sur celui-ci.

11. Système d'implantation pour circuits imprimés comprenant deux dispositifs d'implantation et deux dispositifs à rayons X, **caractérisé en ce qu'**un procédé selon la revendication 9 est mis en oeuvre sur celui-ci.
